# EUROPÄISCHE PATENTSCHRIFT

(11) **EP 0 693 688 B1**
(45) Veröffentlichungstag und Bekanntmachung des Hinweises auf die Patenterteilung: **23.04.2003**
(21) Anmeldenummer: 95111145.9
(22) Anmeldetag: 14.07.1995
(51) Int. Cl.: G01N 35/00, G01N 21/47, G01N 21/86

(54) **Teststreifenauswertegerät mit einer Transporteinheit für Teststreifen**
Test-strip reader having test-strip transporter
Lecteur de bandes test avec moyens de transport des bandes test

(30) Priorität: 19.07.1994 DE 4425439
(43) Veröffentlichungstag der Anmeldung: 24.01.1996
(73) Patentinhaber: Roche Diagnostics GmbH, 68298 Mannheim (DE)
(72) Erfinder: Augstein, Manfred, D-68259 Mannheim (DE)

(56) Entgegenhaltungen:
- EP-A- 0 216 616
- EP-A- 0 431 455
- US-A- 3 918 910

## Beschreibung

Die Erfindung betrifft ein Teststreifenauswertegerät mit einer Transporteinheit, von der die Teststreifen senkrecht zu ihrer Längsrichtung mit einem Rechen über eine Teststreifenauflage zu einer Meßposition und über diese hinaus in einen Entsorgungsbereich transportiert werden, wobei der Rechen durch einen Kulissenantrieb gesteuert wird, der eine Höhenkulisse, einen Führungsarm und einen Antriebsmotor besitzt, wobei der Antriebsmotor die Basis des Führungsarmes in einer Raumrichtung bewegt und die Bewegung des Kopfes des Führungsarmes über einen Führungsbolzen, der in die Höhenkulisse eingreift, so umgelenkt wird, daß der an dem Kopf des Führungsarmes befestigte Rechen eine Bewegung ausführt, die aus mindestens 2 Raumrichtungen zusammengesetzt ist.

Eine photometrische Auswertung von Teststreifen wird im Bereich der klinischen Analyse vor allem für Urin, Blut und Serum durchgeführt. Gebräuchliche Teststreifen besitzen eine Mehrzahl von Testfeldern zur Bestimmung verschiedener Bestandteile der Probe. Die Teststreifen werden üblicherweise in die Probeflüssigkeit eingetaucht, gegebenenfalls ein Überschuß von Probeflüssigkeit abgestreift und daraufhin in ein Auswertegerät gegeben. Die Reaktion der Probenbestandteile führt zu einer farblichen Veränderung der Testfelder, die in der Regel photometrisch, insbesondere reflektometrisch ausgewertet wird. Bezüglich Benutzerfreundlichkeit und Auswertegenauigkeit werden an Teststreifenauswertegeräte hohe Anforderungen gestellt. Die Positionierung der Testfelder unter dem Meßkopf ist entscheidend für die Genauigkeit der Auswertung. Insbesondere die Einhaltung eines definierten Abstandes zwischen Meßkopf und Testfeldoberfläche ist wichtig für die Genauigkeit der Auswertung.

Im Stand der Technik ist aus der Patentanmeldung EP-A-0 431 455 ein Teststreifenauswertegerät bekannt, mit dem der Transport und die Positionierung von Teststreifen möglich ist. Mit der in dieser Patentanmeldung beschriebenen Apparatur wird der schrittweise Transport von Teststreifen über eine synchronisierte Bewegung von Mitnehmerelementen und Teststreifenauflage erreicht. Für die Bewegung der Mitnehmerelemente und der Teststreifenauflage ist jeweils ein separater Motor vorgesehen. Die beschriebene Vorrichtung ist außerdem zur simultanen Auswertung einer Vielzahl von Teststreifen vorgesehen, so daß ihre Verwendung zur Auswertung einzelner Teststreifen für den Benutzer wenig vorteilhaft ist. Da das Gerät zur Auswertung einer Vielzahl von Teststreifen ausgelegt ist, ist es mit dementsprechend höheren Produktionskosten verbunden.

Der Erfindung lag die Aufgabe zugrunde, ein Teststreifenauswertegerät zur Verfügung zu stellen, das zur Auswertung einzelner oder einer geringen Zahl von Teststreifen geeignet ist und sowohl einen hohen Bedienkomfort als auch eine hohe Meßgenauigkeit bietet. Insbesondere war es Aufgabe der Erfindung, eine Transporteinheit für ein Teststreifenauswertegerät zur Verfügung zu stellen, die mit einem einfachen Antrieb die Funktionen Transport und Positionierung erfüllt.

Diese Aufgabe wird durch ein Teststreifenauswertegerät mit einer Transporteinheit gelöst, bei der die Teststreifen senkrecht zu ihrer Längsrichtung mit einem Rechen über eine Teststreifenauflage zu einer Meßposition und über diese hinaus in einen Entsorgungsbereich transportiert werden, wobei der Rechen durch einen Kulissenantrieb gesteuert wird, der eine Höhenkulisse, einen Führungsarm und einen Antriebsmotor besitzt, wobei der Antriebsmotor die Basis des Führungsarmes in einer ersten Raumrichtung bewegt und die Bewegung der Basis (10) des Führungsarmes in der ersten Raumrichtung über einen Führungsbolzen, der in die Höhenkulisse eingreift, so umgelenkt wird, daß die Position des Kopfes (11) des Führungsarmes (8) in einer zweiten Raumrichtung senkrecht zur ersten Raumrichtung in Abhängigkeit von der Position der Basis (10) des Führungsarmes (8) variiert wird, wobei der Rechen (4) am Kopf (11) des Führungsarmes (8) befestigt ist.

Das vorliegende Teststreifenauswertegerät erleichtert dem Benutzer die Auswertung geringer Mengen von Teststreifen auch dadurch, daß der Transport der Teststreifen in die Meßpositionen nicht manuell durchgeführt werden muß, sondern durch eine Transporteinheit vorgenommen wird. Die Transporteinheit besitzt mehrere miteinander kooperierende Elemente. Das Element der Transporteinheit, das direkt mit Testelementen in Kontakt tritt, ist ein Rechen. Der erfindungsgemäße Rechen besitzt die Gestalt einer dünnen Platte mit einer Länge von einigen Zentimetern, einer Breite von wenigen Zentimetern und der Dicke von einigen Millimetern. In den Rechen sind Meßöffnungen integriert, durch die die Testfelder von unter dem Rechen befindlichen Testelementen zugänglich sind. Der Rechen besitzt weiterhin Führungselemente, die eine Führung des Teststreifens über die Teststreifenauflage und eine Ausrichtung der Teststreifen bewirken. Mögliche Führungselemente sind beispielsweise Stege oder Haken, die an der Unterseite des Rechens angebracht sind.

Der Rechen ist an dem Kopf eines Führungsarmes befestigt, an dem sich weiterhin ein Führungsbolzen befindet.

Der Kopf des Führungsarmes ist über ein Verbindungselement flexibel mit der Basis des Führungsarmes verbunden. Das Verbindungselement ermöglicht eine Bewegung des Kopfes senkrecht zur Teststreifenauflage. Bevorzugt dient als Verbindungselement eine Doppelblattfeder. Gegen eine Einzelblattfeder besitzt diese den Vorteil, daß eine Verdrehung des Kopfes des Führungsarmes verhindert wird. Vorteilhaft können Kopf und Basis sowie Doppelblattfeder integral gefertigt sein.

Die Basis des Führungsarmes wird über eine Antriebsvorrichtung in einer Raumrichtung bewegt. Für diese eindimensionale Bewegung sind im Stand der Technik eine Vielzahl von Antriebsvorrichtungen bekannt. Als erfindungsgemäß besonders vorteilhaft hat es sich herausgestellt, wenn sich die Basis des Führungsarmes auf einem Reiter befindet, der auf einer Führungsschiene läuft. Die Bewegung des Reiters auf der Führungsschiene kann beispielsweise durch eine an den Reiter angelenkte Zahnstange erfolgen. Aufgrund der speziellen Anforderungen an die Transporteinheit bezüglich der Positioniergenauigkeit hat es sich als vorteilhaft erwiesen, wenn an dem Reiter eine Schlitzplatte befestigt ist, in die Exzenterbolzen eines Antriebsmotores eingreifen.

Diese Art des Antriebes besitzt ausgezeichnete Positionen, bei denen eine relativ große Winkeländerung der Motorachse nur zu einer sehr geringen Bewegung der Schlitzplatte und damit des Führungsarmes führt. Die ausgezeichneten Positionen können demnach mit sehr hoher Genauigkeit angefahren werden, auch wenn der Antriebsmotor eine relativ große Stellungenauigkeit besitzt. Dies führt zu einer Kosteneinsparung für den Antriebsmotor.

Während der Führungsarm durch den Antriebsmotor bewegt wird, greift ein am Kopf des Führungsarmes befestigter Führungsbolzen in die Höhenkulisse ein. Die Höhenkulisse gibt in Abhängigkeit von der lateralen Position des Führungsarmes die vertikale Position des Kopfes des Führungsarmes vor. Die Höhenkulisse besitzt eine Nut, in welcher der Führungsbolzen läuft. Die Nut besitzt bevorzugt einen geschlossenen Verlauf, so daß bei einer lateralen Bewegung des Führungsarmes von einer vorgegebenen Anfangs- zu einer vorgegebenen Endposition und zurück die Nut einmal vollständig durchlaufen wird. Durch die geschlossene Bahn der Führungsnut können aufeinanderfolgende zyklische Bewegungsabläufe des Führungsarmes und insbesondere seines Kopfes erzeugt werden. Aufgrund der Verbindung von Basis und Kopf des Führungsarmes mit einer Blattfeder ist eine besonders einfache Gestaltung der Höhenkulisse möglich. Die Federspannung kann dazu dienen, dem Kopf des Führungsarmes in seiner vertikalen Bewegungsrichtung eine definierte Bewegungsrichtung zu geben.

Eine mögliche Ausführungsform der Höhenkulisse besteht aus einem im wesentlichen rechteckigen Kunststoffblock, in den eine Nut eingefräst ist. Die Nut besitzt eine im wesentlichen ovale Gestalt, wobei die längeren Teilstücke des Ovals einer großen lateralen und einer geringen vertikalen Bewegung des Führungsbolzens zugeordnet sind und die kürzeren, gebogenen Teilstücke eine starke vertikale Bewegung des Führungsbolzens hervorrufen. Läuft der Führungsbolzen in der beschriebenen Nut, so wird eine eindimensionale Bewegung des Bolzens teilweise in eine zweite Bewegungsrichtung umgesetzt. Bei der beschriebenen Apparatur dient die Führungsnut also dazu, eine laterale Bewegung des Bolzens zum Teil in eine vertikale Bewegung umzusetzen. Durch diesen Mechanismus kann damit ein separater Antrieb für die zweite Bewegungsrichtung eingespart werden.

Eine in das Gerät eingebaute Höhenkulisse besitzt bevorzugt mehrere Plateaus parallel zur lateralen Bewegungsrichtung des Führungsarmes. Diese Plateaus sind verschiedenen vertikalen Positionen des Führungsarmkopfes zugeordnet. Somit können die verschiedenen Plateaus dazu dienen, bei bestimmten Stellungen des Führungsarmes
- den Rechen so weit von der Teststreifenauflage zu entfernen, daß keine Berührung mit einem Teststreifen auf der Teststreifenauflage erfolgt,
- den Rechen in einer Höhe über die Teststreifenauflage zu führen, in der er Teststreifen mitnimmt und in die Meßposition transportiert,
- den Rechen auf den Teststreifen anzudrücken, so daß eine zur Messung geeignete Positionierung vorliegt.

Die Höhenkulisse kann weiterhin eine Arretierungsposition aufweisen, in die der Führungsbolzen geschoben wird, wenn das Gerät transportiert werden soll oder für längere Zeit nicht benutzt wird.

Die Erfindung umfaßt weiterhin ein Verfahren zur Auswertung von Teststreifen in einem Teststreifenauswertegerät mit den Schritten
- Ablage eines Teststreifens auf einer Teststreifenauflage
- Transport des Teststreifens mit einem Rechen in Richtung auf eine Meßposition,
- Halterung des Teststreifens in der Meßposition,
- Photometrische Auswertung des Teststreifens,
- Transport des Teststreifens in einen Entsorgungsbereich
dadurch gekennzeichnet, daß
der Rechen (4) an einem Führungsarm (8) befestigt ist, der über einen Führungsbolzen (9) in eine Höhenkulisse (7) eingreift und die Basis (10) des Führungsarmes (8) durch einen Motor in eine erste Raumrichtung bewegt wird, wobei die Bewegung über die Höhenkulisse (7) so umgelenkt wird, daß die Position des Kopfes (11), des Führungsarmes (8), in einer zweiten Raumrichtung senkrecht zur ersten Raumrichtung in Abhängigkeit von der Position der Basis (10) des Führungsarmes (8) variiert wird, wobei der Rechen an einem Kopf (11) des Führungsarmes (8) befestigt ist

Zur Durchführung des genannten Verfahrens kann die beschriebene Teststreifenauswertevorrichtung herangezogen werden.

Der Auswertung eines Teststreifens geht in der Regel ein Inkontaktbringen des Teststreifens mit einer Probeflüssigkeit voraus. Hierzu kann der Teststreifen entweder manuell oder z. B. durch einen Roboterarm in die Probeflüssigkeit eingetaucht werden. Es ist auch möglich, daß die Probeflüssigkeit z. B. mit einer Pipette auf die Testfelder des Teststreifens aufgebracht wird. Nach dem Inkontaktbringen mit Probeflüssigkeit kann überschüssige Probeflüssigkeit durch Abstreifen des Teststreifens entfernt werden. Die Zuführung eines wie beschrieben präparierten Teststreifens zu einer Teststreifenauswertevorrichtung kann manuell oder durch eine Vorrichtung, z. B. einen Greifarm, erfolgen. Erfindungsgemäß wird der Teststreifen auf einer Teststreifenauflage abgelegt. Bei vielen Teststreifen tritt zeitabhängig eine probeninduzierte Veränderung der Testfelder auf. In vielen Fällen wird daher der Teststreifen vor seiner Auswertung auf der Teststreifenauflage inkubiert. Es ist auch möglich, den Teststreifen zur Inkubation mit dem Rechen an einen anderen Ort auf der Teststreifenauflage zu transportieren. Auf diese Weise können mehrere Teststreifen parallel bearbeitet werden, so daß sich der Durchsatz des Auswertegerätes erhöht.

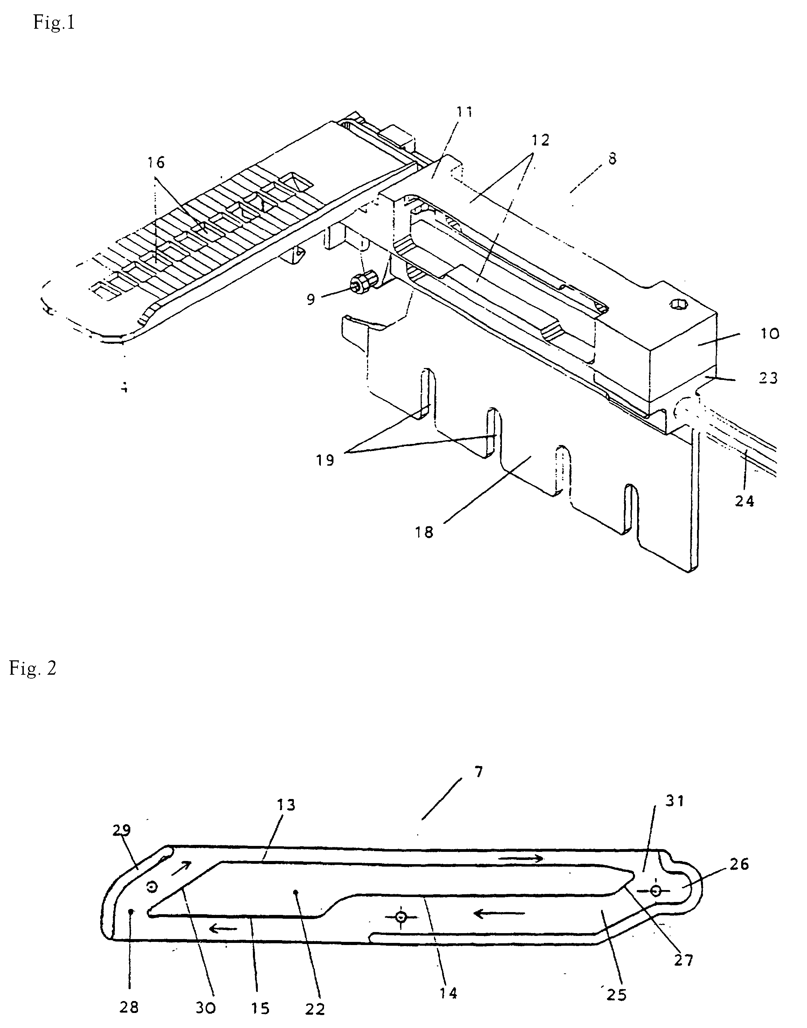

Zur Messung wird der Teststreifen mit dem Rechen über die Teststreifenauflage in die Meßposition geschoben. Der Transport des Teststreifens erfolgt dabei bevorzugt quer zur Längsachse des Teststreifens. Zur Erklärung, wie der Transport des Teststreifens durch die Höhenkulisse gesteuert wird, sei an dieser Stelle auf die Figuren 1 und 2 und die zugehörigen Beschreibungstexte verwiesen.

In der Meßposition wird der Teststreifen durch den Rechen gehaltert, d. h. seine laterale und vertikale Position wird durch die Führungselemente des Rechens genau eingestellt. Die photometrische Auswertung des Teststreifens erfolgt bevorzugt dadurch, daß sich ein Meßkopf über die Oberseite des Rechens bewegt. Der Meßkopf drückt dabei auf die Anordnung aus Rechen, Teststreifen und Teststreifenauflage, so daß die vertikale Position des Teststreifens exakt definiert ist. Nachdem der Meßkopf die einzelnen Testfelder des Teststreifens abgefahren hat, wird er von dem Rechen entfernt. Der nunmehr freigegebene Rechen befördert den Teststreifen in einen Entsorgungsbereich. Es ist erfindungsgemäß auch möglich, daß der Teststreifen nach einer ersten Messung in eine zweite Meßposition transportiert und dort ausgemessen wird. Durch eine zwei- oder mehrfache Ausmessung des Teststreifens kann der zeitliche Verlauf der Nachweisreaktion bestimmt werden.

Ein für die Auswertung geeigneter Meßkopf besitzt eine Strahlungsquelle, mit welcher die Testfelder des Teststreifens bestrahlt werden und einen Strahlungsdetektor, der von den Testfeldern reflektierte Strahlung detektiert. Als Strahlungsquellen sind beispielsweise Leuchtdioden geeignet. Strahlungsdetektoren können in der Praxis z. B. durch Photodioden oder photovoltenische Elemente realisiert werden. Der Aufbau von Meßköpfen ist aus dem Stand der Technik hinlänglich bekannt.

Die zur Auswertung verwendete Strahlung befindet sich in der Regel im sichtbaren Bereich. Eine Verwendung von infraroter oder ultravioletter Strahlung ist jedoch auch möglich.

Die Auswertevorrichtung und insbesondere die Steuerung des Rechen über die Höhenkulisse wird anhand der folgenden Figuren näher erläutert.
Figur 1: Führungsarm des Auswertegerätes
Figur 2: Höhenkulisse
Figur 3: Aufsicht auf ein Teststreifenauswertegerät
Figur 4: Seitenansicht eines Teststreifenauswertegerätes
Figur 5: Ansicht des Rechens von der Unterseite

Figur 1 zeigt den Führungsarm (8) eines Teststreifenauswertegerätes (1). Der Führungsarm (8) besitzt einen Reiter (23), der auf einer Führungsschiene (24) läuft. Durch einen Motor, der in die Schlitze (19) der Schlitzplatte (18) eingreift, wird der gesamte Führungsarm (8) auf der Führungsschiene (24) in einer Raumrichtung bewegt. Schlitzplatte (19) und die Basis (10) des Führungsarmes sind starr mit dem Reiter (23) verbunden. Die Basis (10) des Führungsarmes ist über eine Doppelblattfeder (12) mit dem Kopf (11) des Führungsarmes flexibel verbunden, so daß sich der Kopf (11) des Führungsarmes in den durch die Blattfeder vorgegebenen Grenzen senkrecht zur Bewegungsrichtung des Führungsarmes (8) bewegen kann. An dem Kopf (11) des Führungsarmes befindet sich ein Führungsbolzen (9), der in die Höhenkulisse eingreift. Am Kopf (11) ist ebenfalls der Rechen (4) über eine Steckverbindung befestigt. Der Rechen besitzt Meßöffnungen (16), durch welche die Testfelder eines unter dem Rechen (4) liegenden Teststreifens zugänglich sind.

Figur 2 zeigt eine Höhenkulisse (7), die ein Höhenprofil (22) mit drei zueinander parallelen Ebenen (13, 14, 15) besitzt. Wird der Führungsarm (8) auf der Führungsschiene (24) bewegt, so läuft der Führungsbolzen (9) in der Nut (25).

Ein Auswertezyklus wird anhand von Figur 2 exemplarisch beschrieben:

Bei einer Inbetriebnahme befindet sich der Führungsbolzen (9) in der Regel in der Arretierungsposition (26). Dies entspricht einer Position des Rechens (4) ohne Kontakt mit der Teststreifenauflage. Der Führungsarm wird nun in Richtung auf die Meßposition bewegt, wobei sich der Führungsbolzen auf das Höhenprofil (22) zubewegt und durch die Schräge (27) auf die Fläche (14) abgelenkt wird. Bewegt sich der Führungsbolzen auf der Fläche (14), so befinden sich Teststreifenauflage und Rechen in einem Abstand, in dem die Führungselemente des Rechens den Teststreifen mitführen können. Wird der Führungsbolzen weiterhin in Pfeilrichtung bewegt, so gelangt er über eine Krümmung auf die Ebene (15). Bei Bewegung auf dieser Ebene befinden sich Rechen und Teststreifenauflage in Kontakt, d. h. der zwischen Rechen und Teststreifenauflage befindliche Teststreifen wird auf die Teststreifenauflage gedrückt. Dementsprechend ist einem Bereich der Fläche (15) die Meßposition zugeordnet. Nach erfolgter Messung wird der Führungsarm und damit auch der Führungsbolzen weiter in Pfeilrichtung bewegt und gelangt in eine Umkehrposition (28). Durch die Federwirkung der Doppelblattfeder (12) wird der Kopf des Führungsarmes und damit der Führungsbolzen nach oben, d. h. gegen die Umlenkschiene (29), bewegt. Der Umkehrpunkt (28) fällt ebenfalls mit einer Umkehrung der Bewegungsrichtung des Führungsarmes auf der Führungsschiene zusammen. Der Führungsbolzen wird nunmehr über eine zweite Schräge (30) auf die Ebene (13) bewegt. Die Ebene (13) entspricht einem relativ großen Abstand von Rechen und Teststreifenauflage, bei der ein auf der Teststreifenauflage befindlicher Teststreifen nicht durch die Führungselemente des Rechens berührt wird. Auf der Ebene (13) findet eine Rückführung des Rechens zur Aufnahmeposition für einen neuen Teststreifen statt. Befindet sich der Führungsbolzen in Höhe der zweiten Umkehrposition (31), so wird der Kopf des Führungsarmes durch die Federwirkung der Doppelblattfeder in die Höhe der Arretierungsposition (26) gedrängt. Ein neuer Bewegungszyklus kann ausgehend von dieser Position erfolgen.

Ein Vorteil der beschriebenen Ausführungsform ist es, daß die Bewegungsbahn des Führungsbolzens (9) in der Höhenkulisse (7) geschlossen ist, da so ein zyklischer Ablauf von aufeinanderfolgenden Auswertezyklen möglich ist.

Die relativ einfache Führung des Rechens über die Höhenkulisse ergibt sich unter anderem dadurch, daß an den Umkehrpositionen eine eindeutige Bewegungsrichtung des Führungsbolzens durch die Federspannung der Doppelblattfeder (12) gegeben ist. Auf den Ebenen (13, 14, 15) wirkt die Federwirkung so, daß sie den Führungsbolzen (9) gegen das Höhenprofil (22) drückt. Die Schrägen (27, 30) und auch die Krümmung zwischen den Ebenen (14, 15) dienen zur Spannung der Feder. Auf Höhe der Arretierungsposition (26) befindet sich die Feder etwa in ihrer Ruheposition.

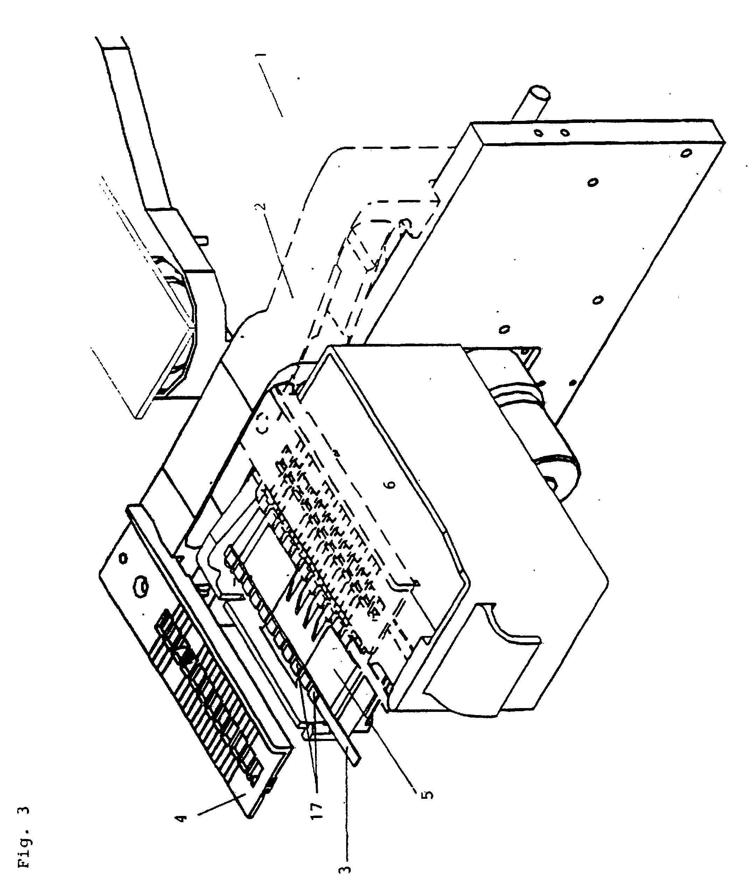

Figur 3 zeigt eine Aufsicht auf ein Teststreifenauswertegerät (1). Der Rechen (4) befindet sich in der Darstellung in der Arretierungsposition (26). Der Teststreifen (3) mit seinen Testfeldern (17) befindet sich auf der Teststreifenauflage. Aus der Zeichnung ist ebenfalls zu erkennen, daß die Teststreifenauflage (5) ebene Flächen jedoch auch Querstreben und Nuten aufweist. Bei einem Transport des Teststreifens über die Teststreifenauflage senkt sich der Rechen so tief über die Teststreifenauflage, daß die Führungselemente des Rechen in die Nuten auf der Teststreifenauflage eingreifen. Auf diese Weise ist ein einfacher und beschädigungsfreier Transport der Teststreifen möglich.

Figur 3 zeigt gestrichelt die Position des Rechen (4) und der Transporteinheit (2) in der Meßposition. Im Anschluß an die Meßposition ist ebenfalls der Entsorgungsbereich (6) zu erkennen.

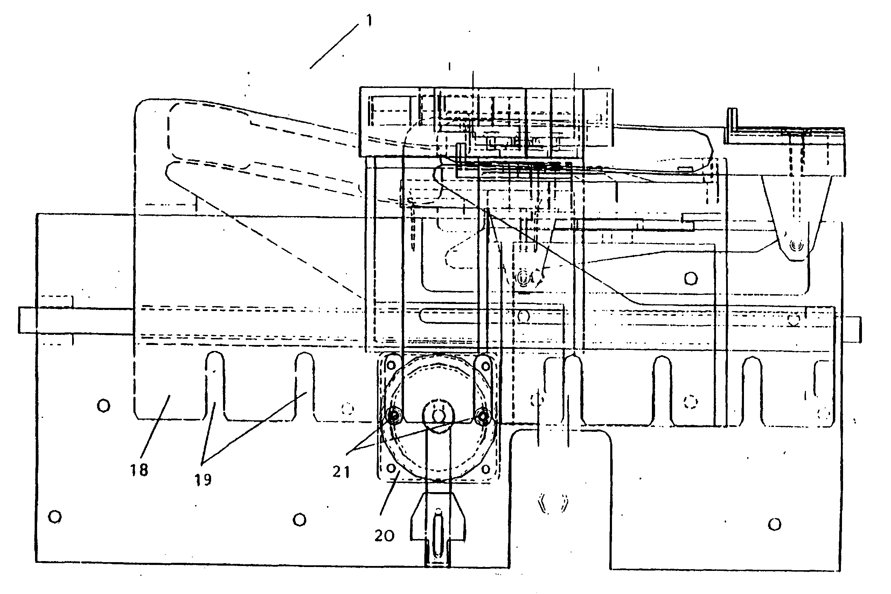

Figur 4 zeigt eine Seitenansicht eines Teststreifenauswertegerätes (1). Insbesondere ist der Antrieb des Führungsarmes über die Schlitzplatte (18) zu erkennen. Der Antriebsmotor (20) besitzt eine Drehscheibe, auf der zwei Exzenterbolzen (21) angebracht sind. Die Exzenterbolzen (21) greifen in die Schlitze (19) der Schlitzplatte (18) ein. In der dargestellten Position entspricht einer relativ großen Motordrehung einer relativ kleine Bewegung der Schlitzplatte (19) und damit des Führungsarmes. Je mehr sich der Motor jedoch in eine um 90° gedrehte Stellung bewegt, desto größer wird das Verhältnis zwischen Verschiebung der Schlitzplatte und Drehwinkel des Motors.

Durch geeignete Anordnung der relativen Position von Motor und Schlitzplatte bzw. des Abstandes der Exzenterbolzen (21) werden ausgewählte Positionen definiert, die aufgrund des beschriebenen Übertragungsverhältnisses von Drehwinkel auf Linearbewegung mit großer Genauigkeit positioniert werden können. Eine ausgewählte Position ist insbesondere die Meßposition.

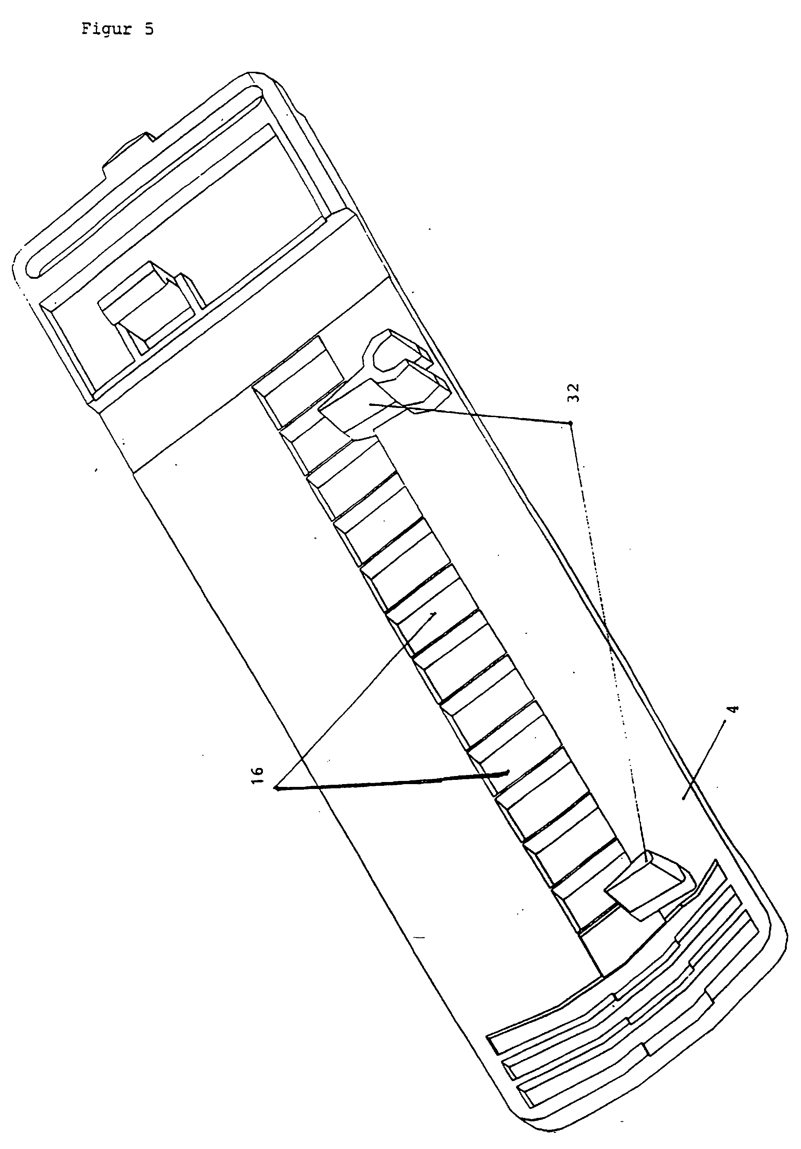

Figur 5 zeigt eine Ansicht des Rechens (4) von der Unterseite. Zu erkennen sind in dieser Figur die Meßöffnungen (16) und insbesondere die Führungselemente (32). Wird ein Testelement vom Rechen (4) auf der Teststreifenauflage mitgeführt, so befindet es sich quer vor den Führungselementen 32), so daß die Testfelder des Testelementes den Meßöffnungen (16) gegenüberliegen. Liegt ein Teststreifen zunächst schräg auf der Teststreifenauflage, so wird er bei der Mitnahme durch den Rechen an die Führungselemente (32) gedrängt, so daß der Teststreifen eine definierte Orientierung zu den Meßöffnungen (16) einnimmt.

### Bezugszeichenliste

- (1): Teststreifenauswertegerät
- (2): Transporteinheit
- (3): Teststreifen
- (4): Rechen
- (5): Teststreifenauflage
- (6): Entsorgungsbereich
- (7): Höhenkulisse
- (8): Führungsarm
- (9): Führungsbolzen
- (10): Basis des Führungsarmes
- (11): Kopf des Führungsarmes
- (12): Doppelblattfeder
- (13): erste Ebene
- (14): zweite Ebene
- (15): dritte Ebene
- (16): Meßöffnungen
- (17): Testfelder
- (18): Schlitzplatte
- (19): Schlitze
- (20): Antriebsmotor
- (21): Exzenterbolzen
- (22): Höhenprofil
- (23): Reiter
- (24): Führungsschiene
- (25): Nut
- (26): Arretierungsposition
- (27): Schräge
- (28): Umkehrposition
- (29): Umlenkschiene
- (30): zweite Schräge
- (31): zweite Umkehrposition
- (32): Führungselemente

## Patentansprüche

1. Teststreifenauswertegerät (1) mit einer Transporteinheit (2), von der die Teststreifen (3) senkrecht zu ihrer Längsrichtung mit einem Rechen (4) über eine Teststreifenauflage (5) zu einer Meßposition und über diese hinaus in einen Entsorgungsbereich (6) transportiert werden,
wobei der Rechen (4) durch einen Kulissenantrieb gesteuert wird, der
- eine Höhenkulisse (7),
- einen Führungsarm (8) und
- einen Antriebsmotor (20)
besitzt, wobei
der Antriebsmotor (20) die Basis (10) des Führungsarmes (8) in einer ersten Raumrichtung bewegt und die Bewegung der Basis (10) des Führungsarmes (8) in der ersten Raumrichtung über einen Führungsbolzen (9), der in die Höhenkulisse (7) eingreift, so umgelenkt wird, daß die Position des Kopfes (11) des Führungsarmes (8) in einer zweiten Raumrichtung ungefähr senkrecht zur ersten Raumrichtung in Abhängigkeit von der Position der Basis (10) des Führungsarmes (8) variiert wird, wobei der Rechen (4) am Kopf (11) des Führungsarmes (8) befestigt ist.

2. Teststreifenauswertegerät gemäß Anspruch 1, **dadurch gekennzeichnet, daß** der Kopf (11) des Führungsarmes über eine Blattfeder (12) mit der Basis (10) des Führungsarmes verbunden ist.

3. Teststreifenauswertegerät gemäß Anspruch 1, **dadurch gekennzeichnet, daß** die Höhenkulisse (7) drei verschiedene Führungsebenen (13, 14, 15) aufweist, wobei
die erste Führungsebene (13) einen Abstand zwischen Rechen (4) und Teststreifenauflage (5) definiert, bei dem ein Teststreifen auf der Teststreifenauflage nicht durch den Rechen berührt wird,
die zweite Führungsebene (14) einen Abstand definiert, bei dem ein Teststreifen auf der Teststreifenauflage mittels Führungselementen (32) des Rechens (4) transportiert wird und
die dritte Führungsebene (15) einen Abstand definiert, bei dem ein Testelement in der Meßposition durch den Rechen auf der Teststreifenauflage gehaltert wird.

4. Teststreifenauswertegerät gemäß einem der Ansprüche 1 oder 3, bei dem die durch die Höhenkulisse (7) definierte Bewegungsbahn des Rechens (4) geschlossen ist.

5. Teststreifenauswertegerät gemäß Anspruch 3, **dadurch gekennzeichnet, daß** der Kopf (11) des Führungsarmes über den Führungsbolzen (9) in der genannten ersten Führungsebene (13) eine Kraft auf das Höhenprofil (22) in Richtung auf die Teststreifenauflage (5) ausübt und in der genannten dritten Führungsebene (15) eine von der Teststreifenauflage weggerichtete Kraft auf das Höhenprofil ausübt.

6. Teststreifenauswertegerät gemäß Anspruch 1, **dadurch gekennzeichnet, daß** der Rechen (4) Führungselemente (32) zum Transport von Teststreifen auf der Teststreifenauflage (5) und Meßöffnungen (16) zur Auswertung von Testfeldern (17) der Teststreifen (3) besitzt.

7. Teststreifenauswertegerät gemäß Anspruch 1, **dadurch gekennzeichnet, daß** an der Basis (10) des Führungsarmes eine Schlitzplatte (18) befestigt ist, in deren Schlitze (19) Exzenterbolzen (21) des Antriebsmotors (20) eingreifen.

8. Verfahren zur Auswertung von Teststreifen in einem Teststreifenauswertegerät mit den Schritten
- Ablage eines Teststreifens auf der Teststreifenauflage,
- Transport des Teststreifens mit einem Rechen (4) in Richtung auf eine Meßposition,
- Halterung des Teststreifens in der Meßposition,
- Photometrische Auswertung des Teststreifens,
- Transport des Teststreifens in einen Entsorgungsbereich (6 )
**dadurch gekennzeichnet, daß**
der Rechen (4) an einem Führungsarm (8) befestigt ist, der über einen Führungsbolzen (9) in eine Höhenkulisse (7) eingreift und die Basis (10) des Führungsarmes (8) durch einen Motor in eine erste Raumrichtung bewegt wird, wobei die Bewegung über die Höhenkulisse (7) so umgelenkt wird, daß die Position des Kopfes (11) des Führungsarmes (8) in einer zweiten Raumrichtung ungefähr senkrecht zur ersten Raumrichtung in Abhängigkeit von der Position der Basis (10) des Führungsarmes (8) variiert wird, wobei der Rechen am Kopf (11) des Führungsarmes (8) befestigt ist.

9. Verfahren gemäß Anspruch 8, bei dem die Basis (10) des Führungsarmes durch den Motor (20) in einer Raumrichtung bewegt wird und durch die Höhenkulisse (7) eine Umlenkung in eine Bewegung des Kopfes (11) des Führungsarmes in mindestens zwei Raumrichtungen erfolgt.

10. Verfahren gemäß Anspruch 8, **dadurch gekennzeichnet, daß** nach der Ablage eines Teststreifens auf der Teststreifenablage eine Inkubation erfolgt; bevor der Teststreifen zur Meßposition transportiert wird.

11. Verfahren gemäß Anspruch 8, **dadurch gekennzeichnet, daß** zur photometrischen Auswertung des Teststreifens ein Meßkopf über den Rechen (4) bewegt wird, der die Testfelder (17) des Teststreifens (3) durch die Meßöffnungen (16) des Rechens (4) bestrahlt und von den Testfeldern reflektierte Strahlung detektiert.

## Claims

1. Test strip evaluation instrument (1) having a transport unit (2) which uses a rake (4) to transport the test strips (3) perpendicular to their longitudinal direction over a test strip support (5) to a measuring position and further into a disposal area (6),
said rake (4) being controlled by a sliding drive comprising
- a guide block with a vertical profile (7),
- a guide arm (8) and
- a drive motor (20)
wherein the drive motor (20) moves the base (10) of the guide arm (8) in a first spatial direction and a guide pin (9) engaging in the guide block with a vertical profile (7) diverts the movement of the base (10) of the guide arm (8) in the first spatial direction such that the position of the head (11) of the guide arm (8) is varied in a second spatial direction approximately perpendicular to the first spatial direction depending on the position of the base (10) of the guide arm (8), the rake (4) being attached to the head (11) of the guide arm (8).

2. Test strip evaluation instrument as claimed in claim 1, **characterized in that** a leaf spring (12) connects the head (11) of the guide arm to the base (10) of the guide arm.

3. Test strip evaluation instrument as claimed in claim 1, **characterized in that** the guide block with a vertical profile (7) has three guide levels (13, 14, 15) wherein
the first guide level (13) defines a distance between rake (4) and test strip support (5) where the rake does not touch a test strip located on the test strip support,
the second guide level (14) defines a distance at which a test strip on the test strip support is transported by means of guide elements (32) of the rake (4) and
the third guide level (15) defines a distance at which the rake holds a test element in a measuring position on the test strip support.

4. Test strip evaluation instrument as claimed in one of the claims 1 or 3, in which the path of movement of the rake (4) defined by the guide block with a vertical profile (7) is closed.

5. Test strip evaluation instrument as claimed in claim 3, **characterized in that** the head (11) of the guide arm exerts a force on the vertical profile (22) directed towards the test strip support (5) by means of the guide pin (9) in the said first guide level (13) and in the said third guide level (15) it exerts a force on the vertical profile that is directed away from the test strip support.

6. Test strip evaluation instrument as claimed in claim 1, **characterized in that** the rake (4) has guide elements (32) for transporting test strips on the test strip support (5) and it has measuring openings (16) to allow the evaluation of test fields (17) of the test strips (3).

7. Test strip evaluation instrument as claimed in claim 1, **characterized in that** a slotted plate (18) is attached to the base (10) of the guide arm, in the slots (19) of which the eccentric pins (21) of the drive motor (20) engage.

8. Method for evaluating test strips in a test strip evaluation instrument comprising the steps
- placing a test strip on a test strip support,
- transporting the test strip with the aid of a rake (4) towards a measuring position,
- holding the test strip in the measuring position
- photometrically evaluating the test strip,
- transporting the test strip into a disposal area (6)
**characterized in that**
the rake (4) is attached to a guide arm (8) which engages via a guide pin (9) in a guide block with a vertical profile (7) and the base (10) of the guide arm (8) is moved by a motor in a first spatial direction, wherein the movement is diverted by the guide block with a vertical profile (7) in such a manner that the position of the head (11) of the guide arm (8) is varied in a second spatial direction approximately perpendicular to the first spatial direction depending on the position of the base (10) of the guide arm (8), the rake being attached to the head (11) of the guide arm (8).

9. Method as claimed in claim 8 in which the base (10) of the guide arm is moved by the motor (20) in a spatial direction and the guide block with a vertical profile (7) redirects the movement of the head (11) of the guide arm into at least two spatial directions.

10. Method as claimed in claim 8, **characterized in that** after placing a test strip on the test strip support, an incubation is carried out before the test strip is moved to the measuring position.

11. Method as claimed in claim 8, **characterized in that** for the photometric evaluation of the test strip, a measuring head is moved over the rake (4) which irradiates the test fields (17) of the test strip (3) through the measuring openings (16) of the rake (4) and detects the radiation reflected by the test fields.

## Revendications

1. Lecteur de bandes test (1) muni d'une unité de transport (2) de laquelle les bandes test (3) sont transportées perpendiculairement par rapport à leur sens longitudinal avec un râteau (4) au-dessus d'un support de bande test (5) par rapport à une position de mesure et au-delà de celle-ci dans une zone d'élimination des déchets (6),
le râteau (4) étant piloté par une commande à coulisse qui possède :
- une coulisse verticale (7) ;
- un bras de guidage (8), et
- un moteur d'entraînement (20),
le moteur d'entraînement (20) déplaçant la base (10) du bras de guidage (8) dans une première direction spatiale et le mouvement de la base (10) du bras de guidage (8) étant renversé dans la première direction spatiale par le biais d'une broche de guidage (9), qui s'engage dans la coulisse verticale (7), de telle sorte que la position de la tête (11) du bras de guidage (8) varie dans une deuxième direction spatiale environ perpendiculairement de la première direction spatiale en fonction de la position de la base (10) du bras de guidage (8), le râteau (4) étant fixé à la tête (11) du bras de guidage (8).

2. Lecteur de bandes test selon la revendication 1, **caractérisé en ce que** la tête (11) du bras de guidage est reliée par un ressort à lames (12) à la base (10) du bras de guidage.

3. Lecteur de bandes test selon la revendication 1, **caractérisé en ce que** la coulisse verticale (7) présente trois niveaux de guidage (13, 14, 15) différents,
le premier niveau de guidage (13) définissant une distance entre le râteau (4) et le support de bandes test (5), dans laquelle une bande test sur le support de bandes test n'est pas en contact avec le râteau,
le deuxième niveau de guidage (14) définissant une distance, dans laquelle une bande test sur le support de bandes test est transportée au moyen des éléments de guidage (32) du râteau (4), et
le troisième niveau de guidage (15) définissant une distance, dans laquelle un élément de test est maintenu en position de mesure par le râteau sur le support de bandes test.

4. Lecteur de bandes test selon l'une quelconque des revendications 1 ou 3, dans lequel la trajectoire de mouvement du râteau (4) défini par la coulisse verticale (7) est fermée.

5. Lecteur de bandes test selon la revendication 3, **caractérisé en ce que** la tête (11) du bras de guidage exerce, par la broche de guidage (9) dans ledit premier niveau de guidage (13), une force sur le profil vertical (22) en direction du support de bandes test (5) et exerce sur le profil vertical, dans ledit troisième niveau de guidage (15), une force orientée à l'opposé du support de bandes test.

6. Lecteur de bandes test selon la revendication 1, **caractérisé en ce que** le râteau (4) possède des éléments de guidage (32) pour le transport de bandes test sur le support de bandes test (5) et des ouvertures de mesure (16) pour la lecture de champs de test (17) des bandes test (3).

7. Lecteur de bandes test selon la revendication 1, **caractérisé en ce qu'**une plaque fendue (18) est fixée à la base (10) du bras de guidage, fentes (19) dans lesquelles s'engagent des broches excentrées (21) du moteur d'entraînement (20).

8. Procédé de lecture de bandes test dans un lecteur de bandes test comprenant les étapes suivantes :
- dépose d'une bande test sur le support de bandes test ;
- transport de la bande test avec un râteau (4) dans le sens d'une position de mesure ;
- maintien de la bande test en position de mesure ;
- lecture photométrique de la bande test,
- transport de la bande test dans une zone d'élimination des déchets (6),
**caractérisé en ce que**
le râteau (4) est fixé à un bras de guidage (8) qui s'engage par une broche de guidage (9) dans une coulisse verticale (7) et qui déplace la base (10) du bras de guidage (8) par le biais d'un moteur dans une première direction spatiale, le mouvement étant renversé par la coulisse verticale (7) de telle sorte que la position de la tête (11) du bras de guidage (8) varie dans une deuxième direction spatiale environ perpendiculairement de la première direction spatiale en fonction de la position de la base (10) du bras de guidage (8), le râteau étant fixé à la tête (11) du bras de guidage (8).

9. Procédé selon la revendication 8, dans lequel la base (10) du bras de guidage se déplace par le biais du moteur (20) dans une direction spatiale et il se produit, par la coulisse verticale (7), un renversement dans un mouvement de la tête (11) du bras de guidage dans au moins deux directions spatiales.

10. Procédé selon la revendication 8, **caractérisé en ce qu'**après la dépose d'une bande test sur le support de bandes test se produit une incubation avant que la bande test ne soit transportée en position de mesure.

11. Procédé selon la revendication 8, **caractérisé en ce que**, pour la lecture photométrique de la bande test, une tête de mesure se déplace au-dessus du râteau (4) qui irradie les champs de test (17) de la bande test (3) par les ouvertures de mesure (16) du râteau (4) et qui détecte la radiation réfléchie à partir des champs de test.
